# EUROPÄISCHE PATENTSCHRIFT

(11) **EP 3 883 802 B1**
(45) Veröffentlichungstag und Bekanntmachung des Hinweises auf die Patenterteilung: **05.07.2023**
(21) Anmeldenummer: 19802051.3
(22) Anmeldetag: 28.10.2019
(51) Int. Cl.: B60K 6/48, B60K 6/387, B60K 6/405

(54) **HYBRIDMODUL SOWIE ANTRIEBSANORDNUNG FÜR EIN KRAFTFAHRZEUG**
HYBRID MODULE AND DRIVE ARRANGEMENT FOR A MOTOR VEHICLE
MODULE HYBRIDE ET SYSTÈME D'ENTRAÎNEMENT POUR VÉHICULE AUTOMOBILE

(30) Priorität: 22.11.2018 DE 102018129387
(43) Veröffentlichungstag der Anmeldung: 29.09.2021
(73) Patentinhaber: Schaeffler Technologies AG & Co. KG, 91074 Herzogenaurach (DE)
(72) Erfinder: LAIGO, Jonathan, 76137 Karlsruhe (DE)
(86) Internationale Anmeldenummer: PCT/DE2019/100926
(87) Internationale Veröffentlichungsnummer: WO 2020/103974

(56) Entgegenhaltungen:
- EP-A1- 1 970 239
- EP-A1- 3 026 296
- DE-A1-102012 022 290
- DE-B3-102017 113 713

## Beschreibung

Die Erfindung betrifft ein Hybridmodul für ein Kraftfahrzeug zum Ankoppeln einer Verbrennungskraftmaschine sowie eines Getriebes und eine Antriebsanordnung für ein Kraftfahrzeug mit einem erfindungsgemäßen Hybridmodul und einem Antriebsaggregat sowie einem Getriebe.

Ein Hybridmodul umfasst üblicherweise eine Anschlusseinrichtung zur mechanischen Ankopplung einer Verbrennungskraftmaschine, eine Trennkupplung, mit der Drehmoment von der Verbrennungskraftmaschine auf das Hybridmodul übertragbar ist und mit der das Hybridmodul von der Verbrennungskraftmaschine trennbar ist, einen elektrische Maschine zur Erzeugung eines Antriebsdrehmoments mit einem Rotor sowie eine Doppelkupplungsvorrichtung, mit der Drehmoment von der elektrischen Maschine und/oder von der Trennkupplung auf einen Antriebsstrang übertragbar ist. Die Doppelkupplungsvorrichtung umfasst eine erste Teilkupplung und eine zweite Teilkupplung. Jeder angeordneten Kupplung ist jeweils ein Betätigungssystem zugeordnet.

Zurzeit erhältliche Hybridmodule, die durch Ankopplung einer Verbrennungskraftmaschine an einen Antriebsstrang eines Fahrzeugs einen Elektromotorbetrieb mit einem Verbrennungskraftmaschinenbetrieb kombinieren können, weisen meist eine elektrische Maschine, welche vorzugsweise ein Elektromotor ist, sowie eine Trennkupplung, deren Betätigungssystem, Lager und Gehäusekomponenten auf, die die drei Hauptkomponenten zu einer funktionstüchtigen Einheit verbinden.

Die elektrische Maschine ermöglicht das elektrische Fahren, Leistungszuwachs zum Verbrennungskraftmaschinenbetrieb und Rekuperieren. Die Trennkupplung und deren Betätigungssystem sorgen für das Ankuppeln oder Abkuppeln der Verbrennungskraftmaschine.

Aus der DE 10 2014 212799 A1 ist ein Hybridmodul bekannt, welches einen elektrischen Zentralausrücker, eine Trennkupplung sowie eine Doppelkupplungsvorrichtung umfasst. Bei derartigen Hybridmodulen kann vorgesehen sein, dass eine Trennkupplungseinrichtung in einem trockenen Gehäuse-Raum angeordnet ist, wobei die Doppelkupplungsvorrichtung in einem nassen Gehäuse-Raum angeordnet ist. Eine Trenneinrichtung zum Trennen der beiden GehäuseRäume kann insbesondere ein Blech mit einer entsprechenden Dichtungseinheit sein. Solche Hybridmodule können ebenfalls durch einen separaten Aufbau der GehäuseRäume realisiert sein, was vorteilhaft für eine separate Belieferung bzw. Montage der Trennkupplungseinrichtung und der Doppelkupplungsvorrichtung an einem Fahrzeug genutzt werden kann.

Aus der WO 2018/064 998 A1 ist ein Hybridmodul für ein Kraftfahrzeug bekannt, welches eine elektrische Maschine mit einem Rotor und einem Stator sowie eine Doppelkupplungsvorrichtung und eine Trennkupplung umfasst. Es ist hier vorgesehen, die Doppelkupplungsvorrichtung und die Trennkupplung als eine gemeinsame Kupplungseinrichtung radial innerhalb dem vom Rotor der elektrischen Maschine umgebenden Raum anzuordnen, wobei die elektrische Maschine mit der gemeinsamen Kupplungseinrichtung räumlich durch eine Wand des Gehäuses des Hybridmoduls von einem Schwingungsdämpfer getrennt ist. Der Gehäuse-Raum, in dem die elektrische Maschine und die Kupplungseinrichtung angeordnet sind, ist dabei nass ausgeführt, wobei der Gehäuse-Raum, in dem der Schwingungsdämpfer angeordnet ist, trocken ausgeführt ist. Die Trennkupplung und die Doppelkupplungsvorrichtung sind somit in einem gemeinsamen nassen Gehäuse-Raum angeordnet.

Aus der DE 10 2012 022 290 A1 ist ferner ein Hybridmodul mit einer innerhalb des Rotors geschachtelten Trennkupplung und einer axial in einem Nassraum angeordneten nassen Doppelkupplung bekannt. Die Trennkupplung befindet sich radial innerhalb des Rotors in einem gesonderten Nassraum, während die elektrische Maschine selber in einem nassen Raum bereitgestellt ist.

Sämtliche räumliche Trennungen von Gehäuse-Innenräumen bewirken jedoch einen zusätzlichen Material- und Volumenbedarf und erschweren eine für die Montage hilfreiche Modularität der einzelnen Einrichtungen des Hybridmoduls.

Hiervon ausgehend liegt der vorliegenden Erfindung die Aufgabe zugrunde, ein Hybridmodul sowie eine damit ausgestattete Antriebsanordnung zur Verfügung zu stellen, die einen einfachen und kostengünstigen Aufbau mit effizient genutztem Bauraum kombinieren.

Die Aufgabe wird durch das erfindungsgemäße Hybridmodul nach Anspruch 1 gelöst. Vorteilhafte Ausgestaltungen des Hybridmoduls sind in den Unteransprüchen 2 bis 8 angegeben. Ergänzend wird eine Antriebsanordnung, welche das Hybridmodul aufweist, gemäß Anspruch 9 zur Verfügung gestellt. Eine vorteilhafte Ausgestaltung der Antriebsanordnung ist im Unteranspruch 10 angegeben.

Die Begriffe axial und radial beziehen sich im Rahmen der vorliegenden Erfindung immer auf die Rotationsachse des Hybridmoduls, die hier der Rotationsachse der Zwischenwelle entspricht.

Die Erfindung betrifft ein Hybridmodul für ein Kraftfahrzeug zum Ankoppeln einer Verbrennungskraftmaschine sowie eines Getriebes. Das Hybridmodul umfasst ein Hybridmodulgehäuse, welches einen Gehäuse-Innenraum ausbildet, der mittels einer Trennwand unterteilt ist, sodass im Gehäuse-Innenraum zumindest eine Kammer als trockener Raum ausgebildet ist, die durch die Trennwand von einem Nassbereich abgetrennt ist. In dem trockenen Raum weist das Hybridmodul eine elektrische Maschine auf sowie eine erste Kupplungseinrichtung, insbesondere eine Trennkupplung, und in dem Nassbereich weist das Hybridmodul eine zweite Kupplungseinrichtung auf, insbesondere eine Doppelkupplungsvorrichtung. Eine Ausgangsseite der ersten Kupplungseinrichtung ist mittels einer Zwischenwelle mit der Eingangsseite der zweiten Kupplungseinrichtung mechanisch gekoppelt, wobei sich die Zwischenwelle über wenigstens eine Lagereinheit zumindest radial an der Trennwand abgestützt.

Es ist somit vorgesehen, dass die Zwischenwelle mit der Eingangsseite der zweiten Kupplungseinrichtung mechanisch gekoppelt ist.

Die elektrische Maschine kann sowohl koaxial als auch achsparallel zur Rotationsachse der Zwischenwelle angeordnet sein.

Die Lagereinheit kann insbesondere als Radiallager ausgestaltet sein und vorteilhafterweise auch dazu eingerichtet sein, axiale Kräfte aufzunehmen.

Die Trennwand kann mit einer Dichtungseinrichtung versehen sein, um den Nassbereich gegenüber dem trockenen Raum abzudichten.

Die insbesondere als Trennkupplung ausgestaltete erste Kupplungseinrichtung kann dabei in normalem Zustand geschlossen ausgeführt sein, wobei die insbesondere als Doppelkupplungsvorrichtung ausgestaltete zweite Kupplungseinrichtung in normalem Zustand geöffnet ausgeführt sein kann. Der normal geöffnete Zustand der zweiten Kupplungseinrichtung kann z.B. über ein Federelement wie eine Tellerfeder oder eine Druckfeder gewährleistet sein.

Dabei wirken die bei Betätigung oder in geschlossenem Zustand der ersten Kupplungseinrichtung auftretenden axialen Kräften den von bei Betätigung oder in geschlossenem Zustand der zweiten Kupplungseinrichtung auftretenden axialen Kräften über die Zwischenwelle entgegengesetzt, wodurch sie einander zumindest teilweise aufheben und eine Entlastung der Lagereinheit realisiert wird.

Das erfindungsgemäße Hybridmodul weist insbesondere den Vorteil auf, dass durch die Trennwand eine dichtende Separierung beider vom Gehäuse ausgebildeter Bereiche bzw. Räume realisiert wird, als auch gleichzeitig eine Abstützung der Zwischenwelle vorgenommen wird.

Gemäß einem Aspekt der Erfindung ist die Trennwand Bestandteil des Hybridmodulgehäuses.

Gemäß einer vorteilhaften Ausführungsform weist das Hybridmodul eine Rotoreinheit auf, welche drehfest im trockenen Raum mit einem Rotor der elektrischen Maschine sowie einer Ausgangsseite der ersten Kupplungseinrichtung gekoppelt ist sowie mit der Zwischenwelle gekoppelt ist, sodass die Rotoreinheit zusammen mit der Zwischenwelle über die Lagereinheit an der Trennwand gelagert ist. Entsprechend übernimmt hier die Trennwand nicht zur die Funktion der abdichtenden Separierung des trockenen Raums vom nassen Bereich, sondern auch die Abstützung des Rotors.

Gemäß einer weiteren Ausführungsform ist die zweite Kupplungseinrichtung eine Doppelkupplungsvorrichtung, die zwei Teilkupplungen umfasst, wobei beide Teilkupplungen im Nassbereich angeordnet sind.

Die beiden Teilkupplungen können dabei sowohl axial nebeneinander oder auch radial übereinander angeordnet sein. Die Anordnung der Teilkupplungen kann abhängig von der Ausführung der die zweite Kupplungseinrichtung benachbarten Gehäusebestandteile sein, wie z.B. eine als eine Getriebeglocke ausgestaltete Wand eines Getriebegehäuses, welche auf Grund ihrer Anpassung an räumliche Restriktionen in besonderer Weise geformt ist, so dass auch die Positionen der Teilkupplungen diesen Restriktionen sind.

Alternativ ist die zweite Kupplungseinrichtung eine Doppelkupplungsvorrichtung, die zwei Teilkupplungen umfasst, wobei nur eine der beiden Teilkupplungen im Nassbereich angeordnet ist.

Somit kann also vorgesehen sein, dass eine der beiden Teilkupplungen zusammen mit der ersten Kupplungseinrichtung im trockenen Raum angeordnet ist.

Gemäß einer weiteren Ausführungsform ist an der Außenseite des Hybridmodulgehäuses ein Dichtelement vorgesehen zur Realisierung einer flüssigkeitsdichten Verbindung mit einem Getriebegehäuse.

Das Dichtelement kann in axialer Richtung eine flächige Anlage bzw. Dichtwirkung bewirken oder im Wesentlichen eine linienförmige Dichtwirkung in radialer Richtung am Getriebegehäuse bewirken.

Es kann vorgesehen sein, dabei z.B. eine Dichtscheibe oder einen Dichtring zwischen dem Hybridmodulgehäuse und dem Gehäuse des Getriebes vorzusehen.

Gemäß einem weiteren Aspekt der Erfindung ist der zweiten Kupplungseinrichtung wenigstens eine als Kolben-Zylinder-Einheit ausgebildete Betätigungseinrichtung zugeordnet, wobei der Zylinder der Betätigungseinrichtung sich an der Trennwand abstützt, insbesondere zumindest an dessen radialen Seiten wenigstens bereichsweise von die Trennwand ausbildenden Material umschlossen ist. Insbesondere kann hier vorgesehen sein, dass die Betätigungseinrichtung zur Betätigung einer der beiden Teilkupplungen der als Doppelkupplungsvorrichtung ausgestalteten zweiten Kupplungseinrichtung vorgesehen ist.

Alternativ können mehrere Betätigungseinrichtungen auf einem Umfang verteilt, z.B. in regelmäßigen Winkelabständen zueinander versetzt, angeordnet sein, um wenigstens eine der Teilkupplungen zu betätigen.

Entsprechend verlaufen die von derartigen Betätigungseinrichtungen bewirkten Kraftvektoren exzentrisch zu einer Rotationsachse des Hybridmoduls.

Weiterhin kann alternativ auch ein mechanischer Kupplungs-Aktor als Betätigungseinrichtung realisiert sein.

In einer weiteren Ausführungsform ist vorgesehen, dass das Hybridmodul drehfest mit einer Eingangsseite der zweiten Kupplungseinrichtung verbunden einen Drehschwingungsdämpfer, insbesondere ein Fliehkraftpendel, umfasst.

Dabei können insbesondere der Rotor der elektrischen Maschine sowie die zweite Kupplungseinrichtung mit dem Drehschwingungsdämpfer verbunden sein. Diese Verbindung kann z.B. durch einen Außenlamellenträger und einen Mitnahmekranz ausgestaltet sein.

Es kann vorgesehen sein, den Drehschwingungsdämpfer in axialer Richtung benachbart zur elektrischen Maschine bzw. benachbart zur ersten Kupplungseinrichtung anzuordnen.

Vorteilhafterweise ist im Hybridmodul vorgesehen, dass eine Eingangsseite der ersten Kupplungseinrichtung rotatorisch auf der Zwischenwelle gelagert ist.

Das erfindungsgemäße Hybridmodul weist den Vorteil auf, dass zur Trennung des trockenen Raums vom Nassbereich eine Wand verwendet wird, die zudem den Zweck der Abstützung der Zwischenwelle realisiert. Diese Trennwand realisiert damit eine Mehrfachfunktion, wodurch zusätzliche Bauteile und Volumen eingespart werden können.

Des Weiteren wird erfindungsgemäß eine Antriebsanordnung für ein Kraftfahrzeug zur Verfügung gestellt, die ein erfindungsgemäßes Hybridmodul sowie ein Antriebsaggregat sowie ein Getriebe aufweist, wobei das Hybridmodul mit dem Antriebsaggregat und dem Getriebe mechanisch über wenigstens eine Kupplungseinrichtung des Hybridmoduls verbunden oder verbindbar ist.

Gemäß einer erfindungsgemäßen Ausführungsform der Antriebsanordnung ist das Hybridmodulgehäuse mechanisch an ein Gehäuse des Getriebes angeschlossen, wobei die Verbindung zwischen dem Hybridmodulgehäuse und dem Gehäuse des Getriebes dichtend ausgebildet ist. Das Gehäuse des Getriebes bildet zumindest abschnittsweise zusammen mit der Trennwand einen Nassraum der Antriebsanordnung aus, der den Nassbereich des Hybridmoduls umfasst.

Das heißt, dass in einer Ausführungsform der Erfindung erst durch das Gehäuse des Getriebes der Nassraum, der einseitig durch die Trennwand begrenzt ist, geschlossen wird.

Die dichtende Verbindung kann durch das erwähnte Dichtelement realisiert werden. Insbesondere realisiert die dichtende Verbindung eine Abdichtung gegen Flüssigkeiten.

Der Nassraum kann dabei vorzugsweise dazu vorgesehen sein, durch ein Öl, insbesondere ein Getriebe-Öl, teilweise befüllt zu werden.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
Fig. 1: ein erfindungsgemäßes Hybridmodul gemäß einer ersten Ausführungsform,
Fig. 2: ein erfindungsgemäßes Hybridmodul gemäß einer zweiten Ausführungsform,
Fig. 3: ein erfindungsgemäßes Hybridmodul gemäß einer dritten Ausführungsform und
Fig. 4: ein erfindungsgemäßes Hybridmodul gemäß einer vierten Ausführungsform.

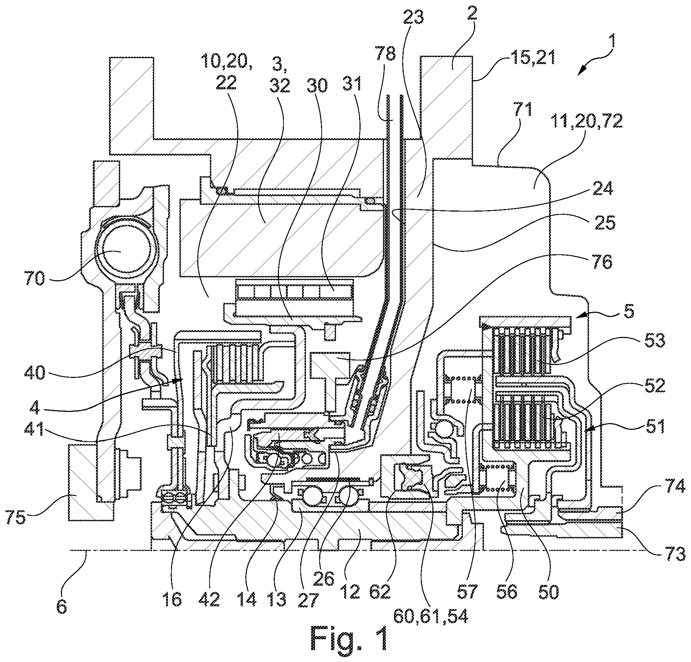

In Fig. 1 ist ein erfindungsgemäßes Hybridmodul 1 gemäß einer ersten Ausführungsform dargestellt.

Das Hybridmodul 1 umfasst ein Hybridmodulgehäuse 2, eine elektrische Maschine 3, eine erste Kupplungseinrichtung 4 sowie eine zweite Kupplungseinrichtung 5. Die drehbaren Bauteile des Hybridmoduls 1 drehen hier um eine Rotationsachse 6 des Hybridmoduls, welche gleichzeitig der Rotationsachse der dargestellten Zwischenwelle 12 entspricht.

Das Hybridmodulgehäuse 2 bildet einen Gehäuse-Innenraum 20, der mittels einer sich im Wesentlichen in radialer Richtung nach radial innen erstreckenden Trennwand 23 des Hybridmodulgehäuses 2 unterteilt ist, nämlich in eine Kammer 22 als trockener Raum 10 auf einer ersten axialen Seite 24 der Trennwand 23 und in einen Nassbereich 11 auf einer zweiten axialen Seite 25 der Trennwand 23, wobei die Trennwand 23 den trockenen Raum 10 und den Nassbereich 11 räumlich voneinander trennt.

Die elektrische Maschine 3 sowie die erste Kupplungseinrichtung 4 sind im trockenen Raum 10 angeordnet, wobei die zweite Kupplungseinrichtung 5 im Nassbereich 11 angeordnet ist. Die erste Kupplungseinrichtung 4 ist als Trennkupplung ausgestaltet, wobei die zweite Kupplungseinrichtung 5 als Doppelkupplungsvorrichtung mit einer ersten Teilkupplung 52 und einer zweiten Teilkupplung 53 ausgestaltet ist.

Dabei ist die erste Kupplungseinrichtung 4 radial innerhalb eines von einem auf einer Rotoraufnahme 30 angeordneten Rotor 31 der elektrischen Maschine 3 ausgebildeten Raums positioniert, wobei der Stator 32 der elektrischen Maschine 3 im radial äußeren Abschnitt des Gehäuse-Innenraums 20 am Hybridmodulgehäuse 2 angeordnet ist. Weiterhin ist radial innerhalb des vom Rotors 31 ausgebildeten Raums axial zwischen der ersten Kupplungseinrichtung 4 und der Trennwand 23 ein Rotorlagegebersensor 76 angeordnet zur Abtastung der Winkelposition des Rotors 31.

Eine mit einer Kurbelwelle 75 drehfest verbundene Schwingungsdämpfungseinheit 70, welche auf der der Zwischenwand 23 abgewandten Seite der elektrischen Maschine 3 in axialer Richtung neben der elektrischen Maschine 3 und der ersten Kupplungseinrichtung 4 angeordnet ist, ist drehfest mit einer Eingangsseite 40 der ersten Kupplungseinrichtung 4 verbunden zum Übertragen von Drehmoment von einer mit der Kurbelwelle 75 verbundenen Verbrennungskraftmaschine (nicht dargestellt) auf die erste Kupplungseinrichtung 4.

Eine Betätigungseinrichtung 42 der ersten Kupplungseinrichtung 4 ist auf einer ersten axiale Seite der Trennwand 24 der Trennwand 23 angeordnet, wobei die Betätigungseinrichtung 42 der ersten Kupplungseinrichtung 4 als hydraulische Betätigungseinrichtung ausgestaltet ist und dazu eine hydraulische Leitung 78 aufweist, die sich von außerhalb des Gehäuse-Innenraums 20 durch das Hybridmodulgehäuse 2 und angelegt an der ersten axialen Seite 24 der Trennwand 23 zur Betätigungseinrichtung 42 der ersten Kupplungseinrichtung 4 erstreckt und strömungstechnisch mit dieser verbunden ist.

Eine Rotoreinheit 16 erstreckt sich axial zwischen dem Rotorlagegebersensor 76 und der ersten Kupplungseinrichtung 4 und ausgehend vom Rotor 31 nach radial innen, wobei sie dabei drehfest mit der Rotoraufnahme 30 und somit mit dem Rotor 31 der elektrischen Maschine 3 sowie mit einer Ausgangsseite 41 der ersten Kupplungseinrichtung 4 verbunden ist.

Das Hybridmodul 1 umfasst weiterhin eine Zwischenwelle 12, welche drehfest mit der Rotoreinheit 16, also mit der Ausgangsseite 41 der ersten Kupplungseinrichtung 4 und mit dem Rotor 31 der elektrischen Maschine 3, verbunden ist, und welche mit einer Eingangsseite 50 der zweiten Kupplungseinrichtung 5, also mit der ersten Teilkupplung 52 sowie der zweiten Teilkupplung 53, verbunden ist.

Die Zwischenwelle 12 verläuft dabei in axialer Richtung vom trockenen Raum 10 zum Nassbereich 11, wobei die Zwischenwelle 12 über eine Lagereinheit 13 an der radialen Innenseite 26 der Trennwand 23 abgestützt ist. Die Lagereinheit 13 ist dabei als Wälzlager, insbesondere Zweireihiges-Kugellager, ausgestaltet und dazu eingerichtet, die Zwischenwelle 12 sowohl in axialer wie auch in radialer Richtung an der Trennwand 23 zu stützen. Eine Dichtungseinrichtung 14 ist zwischen der radialen Innenseite 26 der Trennwand 23 und der Zwischenwelle 12 angeordnet zur strömungstechnischen Trennung des trockenen Raums 10 vom Nassbereich 11. Die Dichtungseinrichtung 14 ist dabei auf der dem trockenen Raum 10 zugewandten Seite der Lagereinheit 13 axial neben der Lagereinheit 13 angeordnet, so dass die Lagereinheit 13 selbst im Nassbereich 11 angeordnet ist.

Die beiden Teilkupplungen 52, 53 der als Doppelkupplung ausgestalteten zweiten Kupplungseinrichtung 5 sind in radialer Richtung nebeneinander angeordnet, wobei die erste Teilkupplung 52 radial innerhalb der zweiten Teilkupplung 53 angeordnet ist. Eine Betätigungseinrichtung 54 der ersten Teilkupplung 52 ist als eine konzentrische erste Kolben-Zylinder-Einheit 60 mit einem ersten Kolben 61 und einem ersten Zylinder 62 ausgestaltet, wobei der erste Zylinder 62 an der zweiten axialen Seite 25 sowie der radialen Innenseite 26 der Trennwand 23 angeordnet ist. Eine hier nicht dargestellte Betätigungseinrichtung der zweiten Teilkupplung 53 ist als eine weitere konzentrische Kolben-Zylinder-Einheit ausgestaltet.

Die beiden Teilkupplungen 52, 53 umfassen jeweils eine Rückstellfeder 56, 57 zur Realisierung einer normal geöffneten Stellung der jeweiligen Teilkupplung 52, 53 im Belastungs- bzw. Betätigungsfreien Zustand. Die beiden Teilkupplungen 52, 53 sind auf einer der elektrischen Maschine 3 abgewandten Ausgangsseite 51 der zweiten Kupplungseinrichtung 5 mit einer ersten Getriebeeingangswelle 73 sowie einer zweiten Getriebeeingangswelle 74 verbunden. Ein von einer Verbrennungskraftmaschine (nicht dargestellt) zur Verfügung gestelltes Drehmoment wird somit über die Kurbelwelle 75 in das Hybridmodul 1 eingebracht und über die Schwingungsdämpfereinheit 70 an die erste Kupplungseinrichtung 4 übertragen, von der das Drehmoment wiederum an die elektrische Maschine 3 bzw. deren Rotor 31 und von dort über die Rotoreinheit 16 an die Zwischenwelle 12 übertragen wird. Der Drehmoment-Übertragungspfad von der elektrischen Maschine 3 zu den Getriebeausgangswellen 73, 74 verläuft somit über die Rotoreinheit 16 auf die Zwischenwelle 12 und von dieser bei geschlossener erster Teilkupplung 52 der zweiten Kupplungseinrichtung 4 zu der ersten Getriebeausgangswellen 73 bzw. bei geschlossener zweiter Teilkupplung 53 der zweiten Kupplungseinrichtung 4 zu der zweiten Getriebeausgangswellen 73.

Ist die erste Kupplungseinrichtung 4 geschlossen, verläuft das von der nicht dargestellten Verbrennungskraftmaschine bereitgestellte Drehmoment ebenfalls im Wesentlichen entlang des Drehmoment-Übertragungspfad über die elektrische Maschine 3 bzw. deren Rotor 31 zu den Getriebeausgangswellen 73, 74.

In Figur 1 ist weiterhin eine Kontur 71 eines Gehäuse eines Getriebes gezeigt, welches sich im Wesentlichen auf der der elektrischen Maschine 3 abgewandten Seite der zweiten Kupplungseinrichtung 5 erstreckt und an die Außenseite 21 des Hybridmodulgehäuses 2 angelegt ist. Das Gehäuse des Getriebes bildet dadurch zusammen mit der zweiten axialen Seite 25 der Trennwand 23 einen Nassraum 72, welcher den Nassbereich 11 umfasst. Zwischen dem Gehäuses des Getriebes und der Außenseite 21 des Hybridmodulgehäuses 2 ist dabei ein Dichtelement 15 vorgesehen, welches in axialer Richtung eine flächige Anlage bzw. Dichtwirkung zwischen der Kontur 71 des Gehäuse des Getriebes und der Außenseite 21 des Hybridmodulgehäuses 2 bewirkt und somit den Nassraum 72 strömungstechnisch abdichtet.

Das Hybridmodul und das Getriebe bilden zusammen einen Teil der erfindungsgemäßen Antriebsanordnung aus.

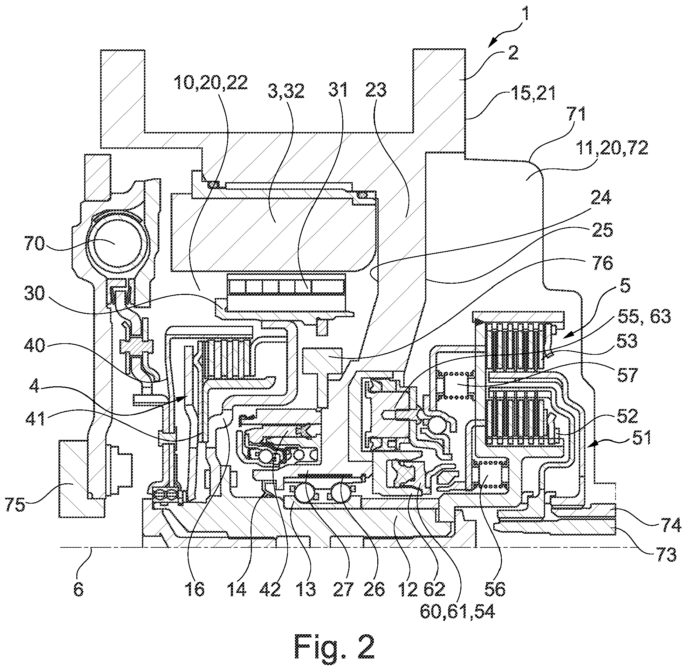

Figur 2 zeigt eine alternative Ausgestaltung, bei der im Gegensatz zu der in Figur 1 dargestellten Ausführungsform, für die beiden Teilkupplungen 52, 53 der zweiten Kupplungseinrichtung 5 zusätzlich zu der wie in Figur 1 dargestellten konzentrischen ersten Kolben-Zylinder-Einheit 60 eine einzelne, am Umfang angeordnete Betätigungseinrichtung 55 der zweiten Teilkupplung 53 dargestellt ist, die entsprechend als exzentrische weitere Kolben-Zylinder-Einheit 63 ausgestaltet ist. Es ist vorteilhafterweise vorgesehen, dass mehrere derartiger weiterer Kolben-ZylinderEinheiten 63 am hier dargestellten Umfang angeordnet sind, wenigstens drei derartige Einheiten in einem Winkelabstand von 120°. Ansonsten entspricht das in Figur 2 dargestellte Hybridmodul im Wesentlichen dem in Figur 1 gezeigten Hybridmodul.

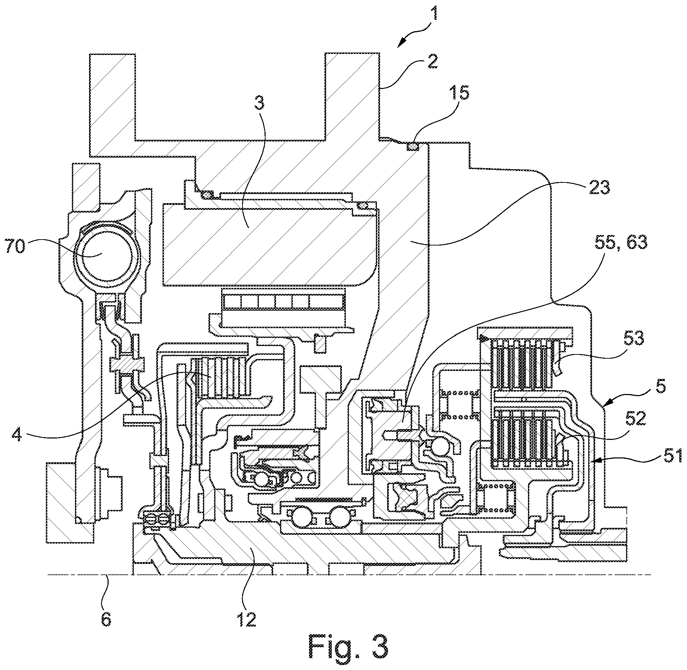

Die in Figur 3 gezeigte Ausführungsform des erfindungsgemäßen Hybridmoduls ist im Wesentlichen gemäß der in Figur 3 dargestellten Ausführungsform realisiert, mit dem Unterschied, dass entgegen der in den Figuren 1 und 2 dargestellten Versionen ein Dichtelement 15 am Hybridmodulgehäuse 2 an einer radialen Außenseite des Hybridmodulgehäuses 2 als Dichtring angeordnet ist, und nicht wie in den Figuren 1 und 2 dargestellt als flächige Dichtung, die zu einer axialen Seite ausgerichtet ist. Ansonsten wird bezüglich der weiteren Elemente dieser Ausführungsform des Hybridmoduls 1 auf die Beschreibung zu den Figuren 1 und 2 verwiesen.

Diese als Dichtring ausgeführte Dichtung 15 liegt somit an einer komplementär geformten radialen Innenwand eines angrenzenden Gehäuses eines Getriebes (hier nicht dargestellt) an, um den Nassbereich 11 bzw. den dadurch ausgebildeten Nassraum von der Umgebung abzugrenzen.

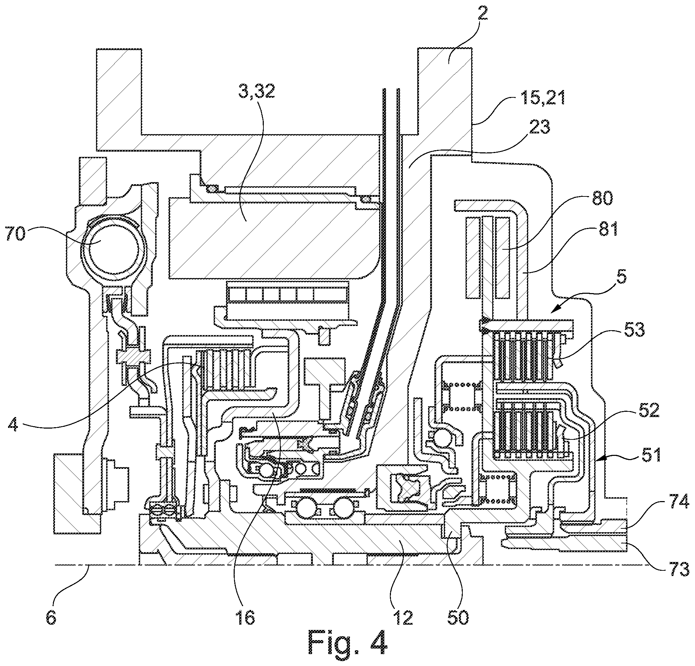

Figur 4 zeigt eine Ausführungsform des erfindungsgemäßen Hybridmoduls 1, welche weitestgehend der in Figur 1 dargestellten Ausführungsform entspricht, sodass bezüglich der übereinstimmenden Elemente und Merkmale des Hybridmoduls 1 auf die Beschreibung zu Figur 1 verwiesen wird.

Der Unterschied zwischen der in Figur 4 dargestellten Ausführungsform und der in Figur 1 dargestellten Ausführungsform ist die Anordnung eines Fliehkraftpendels 80 an der zweiten Kupplungseinrichtung 5, welches einseitig axial sowie radial von einem Schutzelement 81 umgeben ist. Das Fliehkraftpendel 80 ist derart mit der zweiten Kupplungseinrichtung 5 gekoppelt, dass es über die Eingangsseite 50 der zweiten Kupplungseinrichtung 5 mit der Zwischenwelle 12 und somit auch mit der Rotoreinheit 16 drehfest verbunden ist, sodass sämtliche auf diese Elemente wirkenden Drehschwingungen zumindest teilweise durch das Fliehkraftpendel 80 eliminiert bzw. minimiert werden können.

Mit der erfindungsgemäßen Ausgestaltung des hier vorgeschlagenen Hybridmoduls wird ein einfacher und effizienter Aufbau mit geringem Bauraumbedarf kombiniert.

### Bezugszeichenliste

- 1: Hybridmodul
- 2: Hybridmodulgehäuse
- 3: elektrische Maschine
- 4: erste Kupplungseinrichtung
- 5: zweite Kupplungseinrichtung
- 6: Rotationsachse
- 10: trockener Raum
- 11: Nassbereich
- 12: Zwischenwelle
- 13: Lagereinheit
- 14: Dichtungseinrichtung
- 15: Dichtelement
- 16: Rotoreinheit
- 20: Gehäuse-Innenraum
- 21: Außenseite des Hybridmodulgehäuses
- 22: Kammer
- 23: Trennwand
- 24: erste axiale Seite der Trennwand
- 25: zweite axiale Seite der Trennwand
- 26: radiale Innenseite der Trennwand
- 27: radiale Außenseite der Trennwand
- 30: Rotoraufnahme
- 31: Rotor
- 32: Stator
- 40: Eingangsseite der ersten Kupplungseinrichtung
- 41: Ausgangsseite der ersten Kupplungseinrichtung
- 42: Betätigungseinrichtung der ersten Kupplungseinrichtung
- 50: Eingangsseite der zweiten Kupplungseinrichtung
- 51: Ausgangsseite der zweiten Kupplungseinrichtung
- 52: erste Teilkupplung
- 53: zweite Teilkupplung
- 54: Betätigungseinrichtung der ersten Teilkupplung
- 55: Betätigungseinrichtung der zweiten Teilkupplung
- 56: Rückstellfeder der ersten Teilkupplung
- 57: Rückstellfeder der zweiten Teilkupplung
- 60: erste Kolben-Zylinder-Einheit
- 61: erster Kolben
- 62: erster Zylinder
- 63: weitere Kolben-Zylinder-Einheit
- 70: Schwingungsdämpfereinheit
- 71: Kontur des Getriebegehäuses
- 72: Nassraum
- 73: erste Getriebeeingangswelle
- 74: zweite Getriebeeingangswelle
- 75: Kurbelwelle
- 76: Rotorlagegebersensor
- 77: Drehschwingungsdämpfer
- 78: hydraulische Leitung
- 80: Fliehkraftpendel
- 81: Schutzelement

## Patentansprüche

1. Hybridmodul (1) für ein Kraftfahrzeug zum Ankoppeln einer Verbrennungskraftmaschine sowie eines Getriebes, umfassend ein Hybridmodulgehäuse (2), welches einen Gehäuse-Innenraum (20) ausbildet, der mittels einer Trennwand (23) unterteilt ist, sodass im Gehäuse-Innenraum (20) zumindest eine Kammer (22) als trockener Raum (10) ausgebildet ist, die durch die Trennwand (23) von einem Nassbereich (11) abgetrennt ist, und wobei das Hybridmodul (1) in dem trockenen Raum (10) eine elektrische Maschine (3) und in dem Nassbereich (11) eine zweite Kupplungseinrichtung (5) aufweist, insbesondere eine Doppelkupplungsvorrichtung, **dadurch gekennzeichnet, dass** die elektrische Maschine (3) sowie eine erste Kupplungseinrichtung (4) im trockenen Raum (10) angeordnet und eine Ausgangsseite (41) der ersten Kupplungseinrichtung (4) mittels einer Zwischenwelle (12) mit der Eingangsseite (50) der zweiten Kupplungseinrichtung (5) mechanisch gekoppelt ist, wobei sich die Zwischenwelle (12) über wenigstens eine Lagereinheit (13) zumindest radial an der Trennwand (23) abstützt.

2. Hybridmodul (1) nach Anspruch 1,
**dadurch gekennzeichnet, dass** die Trennwand (23) Bestandteil des Hybridmodulgehäuses (2) ist.

3. Hybridmodul (1) nach einem der vorhergehenden Ansprüche,
**dadurch gekennzeichnet, dass** das Hybridmodul (1) eine Rotoreinheit (16) aufweist, welche drehfest im trockenen Raum (10) mit einem Rotor (31) der elektrischen Maschine (2) sowie einer Ausgangsseite (41) der ersten Kupplungseinrichtung (4) gekoppelt ist sowie mit der Zwischenwelle (12) gekoppelt ist, sodass die Rotoreinheit (16) zusammen mit der Zwischenwelle (12) über die Lagereinheit (13) an der Trennwand (23) gelagert ist.

4. Hybridmodul (1) nach einem der vorhergehenden Ansprüche,
**dadurch gekennzeichnet, dass** die zweite Kupplungseinrichtung (5) eine Doppelkupplungsvorrichtung ist, die zwei Teilkupplungen (52, 53) umfasst, wobei beide Teilkupplungen (52, 53) im Nassbereich angeordnet sind.

5. Hybridmodul (1) nach einem der Ansprüche 1 bis 3,
**dadurch gekennzeichnet, dass** die zweite Kupplungseinrichtung (5) eine Doppelkupplungsvorrichtung ist, die zwei Teilkupplungen (52, 53) umfasst, wobei nur eine der beiden Teilkupplungen (52, 53) im Nassbereich angeordnet ist.

6. Hybridmodul (1) nach einem der vorhergehenden Ansprüche,
**dadurch gekennzeichnet, dass** an der Außenseite (21) des Hybridmodulgehäuses (2) ein Dichtelement (15) vorgesehen ist zur Realisierung einer flüssigkeitsdichten Verbindung mit einem Getriebegehäuse.

7. Hybridmodul (1) nach einem der vorhergehenden Ansprüche,
**dadurch gekennzeichnet, dass** der zweiten Kupplungseinrichtung (5) wenigstens eine als Kolben-Zylinder-Einheit (60, 63) ausgebildete Betätigungseinrichtung (54, 55) zugeordnet ist, wobei der Zylinder (62) der Betätigungseinrichtung (54, 55) sich an der Trennwand (23) abstützt, insbesondere zumindest an dessen radialen Seiten wenigstens bereichsweise von die Trennwand (23) ausbildenden Material umschlossen ist.

8. Hybridmodul (1) nach einem der vorhergehenden Ansprüche,
**dadurch gekennzeichnet, dass** das Hybridmodul (1) drehfest mit einer Eingangsseite (50) der zweiten Kupplungseinrichtung (5) verbunden einen Drehschwingungsdämpfer (77), insbesondere ein Fliehkraftpendel, umfasst.

9. Antriebsanordnung für ein Kraftfahrzeug, umfassend ein Hybridmodul (1) gemäß wenigstens einem der Ansprüche 1 bis 8 sowie ein Antriebsaggregat, insbesondere eine Verbrennungskraftmaschine, sowie ein Getriebe, wobei das Hybridmodul (1) mit dem Antriebsaggregat und dem Getriebe mechanisch über wenigstens eine Kupplungseinrichtung (4, 5) des Hybridmoduls (1) verbunden oder verbindbar ist.

10. Antriebsanordnung nach Anspruch 9,
**dadurch gekennzeichnet, dass** das Hybridmodulgehäuse (2) mechanisch an ein Getriebegehäuse des Getriebes angeschlossen ist, wobei die Verbindung zwischen dem Hybridmodulgehäuse (2) und dem Getriebegehäuse dichtend ausgebildet ist und das Getriebegehäuse zumindest abschnittsweise zusammen mit der Trennwand (23) einen Nassraum (72) der Antriebsanordnung ausbildet, der den Nassbereich (11) des Hybridmoduls (1) umfasst.

## Claims

1. A hybrid module (1) for a motor vehicle for coupling an internal combustion engine and a transmission, comprising a hybrid module housing (2), which forms a housing interior (20) which is divided by a partition wall (23) so that, in the housing interior (20), at least one chamber (22) is designed as a dry space (10), which is separated from a wet region (11) by the partition wall (23), and wherein the hybrid module (1) has an electrical machine (3) in the dry space (10) and has a second clutch device (5) in the wet region (11), in particular a double clutch device, **characterised in that** the electrical machine (3) and a first clutch device (4) are arranged in the dry space (10) and an output side (41) of the first clutch device (4) is mechanically coupled to the input side (50) of the second clutch device (5) by means of an intermediate shaft (12), wherein the intermediate shaft (12) is supported at least radially on the partition wall (23) by at least one bearing unit (13).

2. The hybrid module (1) according to Claim 1,
**characterised in that** the partition wall (23) forms part of the hybrid module housing (2).

3. The hybrid module (1) according to one of the preceding claims,
**characterised in that** the hybrid module (1) has a rotor unit (16) which is coupled in a non-rotatable manner in the dry space (10) to a rotor (31) of the electrical machine (2) and to an output side (41) of the first clutch device (4), and is coupled to the intermediate shaft (12), so that the rotor unit (16) is mounted together with the intermediate shaft (12) on the partition wall (23) by the bearing unit (13).

4. The hybrid module (1) according to one of the preceding claims,
**characterised in that** the second clutch device (5) is a double clutch device which comprises two partial clutches (52, 53), wherein both partial clutches (52, 53) are arranged in the wet region.

5. The hybrid module (1) according to one of claims 1 to 3,
**characterised in that** the second clutch device (5) is a double clutch device which comprises two partial clutches (52, 53), wherein only one of the two partial clutches (52, 53) is arranged in the wet region.

6. The hybrid module (1) according to one of the preceding claims,
**characterised in that** a sealing element (15) is provided on the outer side (21) of the hybrid module housing (2) in order to implement a liquid-tight connection with a transmission housing.

7. The hybrid module (1) according to one of the preceding claims,
**characterised in that** the second clutch device (5) is assigned at least one actuating device (54, 55) designed as a piston-cylinder unit (60, 63), wherein the cylinder (62) of the actuating device (54, 55) is supported on the partition wall (23), in particular at least on its radial sides surrounded at least in regions by the material forming the partition wall (23).

8. The hybrid module (1) according to one of the preceding claims,
**characterised in that** the hybrid module (1) comprises a torsional vibration damper (77), in particular a centrifugal pendulum, which is connected in a non-rotatable manner to an input side (50) of the second clutch device (5).

9. A drive arrangement for a motor vehicle, comprising a hybrid module (1) according to at least one of claims 1 to 8, and a drive unit,
in particular an internal combustion engine and a transmission, wherein the hybrid module (1) is mechanically connected or connectable to the drive unit and the transmission via at least one clutch unit (4, 5) of the hybrid module (1).

10. The drive arrangement according to Claim 9,
**characterised in that** the hybrid module housing (2) is mechanically connected to a transmission housing of the transmission, wherein the connection between the hybrid module housing (2) and the transmission housing is designed to be sealing, and wherein the transmission housing forms, at least in sections together with the partition wall (23), a wet space (72) of the drive arrangement, which comprises the wet region (11) of the hybrid module (1).

## Revendications

1. Module hybride (1) pour un véhicule automobile destiné à coupler un moteur à combustion interne et une transmission, comprenant un boîtier de module hybride (2) qui forme un intérieur de boîtier (20) qui est divisé par une cloison (23) de façon que, à l'intérieur du boîtier (20), au moins une chambre (22) soit conçue comme un espace sec (10), qui est séparée d'une zone humide (11) par la cloison (23) et le module hybride (1), dans l'espace sec (10), présentant une machine électrique (3) et, dans la zone humide (11), présentant un second dispositif d' embrayage (5), en particulier un dispositif à double embrayage, **caractérisé en ce que** la machine électrique (3) et un premier dispositif d'embrayage (4) sont agencé dans l'espace sec (10) et un côté sortie (41) du premier dispositif d'embrayage (4) est couplé mécaniquement au côté entrée (50) du second dispositif d'embrayage (5) au moyen d'un arbre intermédiaire (12), l'arbre intermédiaire (12) étant situé au moins radialement sur la cloison (23) par l'intermédiaire d'au moins un ensemble palier (13).

2. Module hybride (1) selon la revendication 1,
**caractérisé en ce que** la cloison (23) fait partie du boîtier de module hybride (2).

3. Module hybride (1) selon l'une quelconque des revendications précédentes,
**caractérisé en ce que** le module hybride (1) présente un ensemble rotor (16) qui est couplé, de façon solidaire en rotation dans l'espace sec (10), à un rotor (31) de la machine électrique (2) et à un côté de sortie (41) du premier dispositif d'embrayage (4) et qui est couplé à l'arbre intermédiaire (12), de façon que l'ensemble rotor (16) soit monté, avec l'arbre intermédiaire (12), sur la cloison (23) par l'intermédiaire de l'ensemble palier (13).

4. Module hybride (1) selon l'une quelconque des revendications précédentes,
**caractérisé en ce que** le second dispositif d'embrayage (5) est un dispositif à double embrayage qui comprend deux embrayages partiels (52, 53), les deux embrayages partiels (52, 53) étant agencés dans la zone humide.

5. Module hybride (1) selon l'une quelconque des revendications 1 à 3,
**caractérisé en ce que** le second dispositif d'embrayage (5) est un dispositif à double embrayage qui comprend deux embrayages partiels (52, 53), un seul des deux embrayages partiels (52, 53) étant agencé dans la zone humide.

6. Module hybride (1) selon l'une quelconque des revendications précédentes,
**caractérisé en ce qu'**un élément d'étanchéité (15) est fourni sur le côté extérieur (21) du boîtier de module hybride (2) afin d'établir une connexion étanche aux liquides avec un boîtier de transmission.

7. Module hybride (1) selon l'une quelconque des revendications précédentes,
**caractérisé en ce qu'**au moins un dispositif d'actionnement (54, 55) conçu comme un ensemble piston-cylindre (60, 63) est associé au second dispositif d'embrayage (5), le cylindre (62) du dispositif d'actionnement (54, 55) étant en appui sur la cloison (23), notamment étant entouré, au moins sur ses côtés radiaux, au moins dans certaines zones, par le matériau formant la cloison (23).

8. Module hybride (1) selon l'une quelconque des revendications précédentes,
**caractérisé en ce que** le module hybride (1) comprend un amortisseur de vibrations de torsion (77), notamment un pendule centrifuge, relié de façon solidaire en rotation à un un côté entrée (50) du second dispositif d'embrayage (5).

9. Système d' entraînement pour un véhicule automobile, comprenant un module hybride (1) selon au moins l'une quelconque des revendications 1 à 8 et un ensemble d'entraînement, en particulier une moteur à combustion interne, et une transmission, le module hybride (1) étant relié ou pouvant être relié mécaniquement, par l'intermédiaire d'au moins un ensemble embrayage (4, 5) du module hybride (1), à l'ensemble d'entraînement et à la transmission.

10. Système d'entraînement selon la revendication 9,
**caractérisé en ce que** le boîtier de module hybride (2) est relié mécaniquement à un boîtier de transmission de la transmission, la liaison entre le boîtier de module hybride (2) et le boîtier de transmission étant conçue de manière étanche et le boîtier de transmission formant, au moins par sections conjointement avec la cloison (23), un espace humide (72), du système d'entraînement, qui comprend la zone humide (11) du module hybride (1).
